# EUROPÄISCHE PATENTANMELDUNG

(11) **EP 4 509 992 A1**
(43) Veröffentlichungstag der Anmeldung: **19.02.2025**
(21) Anmeldenummer: 23192215.4
(22) Anmeldetag: 18.08.2023
(51) Int. Cl.: G06F 11/36

(54) **TEST VON AUTOMATISIERUNGSANWENDUNGEN**

(71) Anmelder: Siemens Aktiengesellschaft, 80333 München (DE)
(72) Erfinder: Baierlein, Michael, 91174 Spalt (DE); Budday, Dominik, 91056 Erlangen (DE); Frank, Matthias, 91052 Erlangen (DE); Stein, Alexander, 90587 Veitsbronn (DE)
(74) Vertreter: Siemens Patent Attorneys

(57) **Zusammenfassung**

Es wird vorgeschlagen, den Test einer Automatisierungsanwendung zu verbessern. Hierzu werden Daten einer Automatisierungssprache für eine Testumgebung verarbeitet, wobei die Testumgebung eine Testumgebung für das reale System der Automatisierungsanwendung und/oder für mindestens eine Simulation der Automatisierungsanwendung umfasst. Schließlich wird mindestens ein Test der Testumgebung durchgeführt. Hierbei ist es von Vorteil, dass aufgrund der verbesserten Tests eine höhere Sicherheit der Automatisierungslösung erreicht werden kann.

## Beschreibung

Die Erfindung betrifft einen innovativen Ansatz zum Testen von Automatisierungslösungen.

In Automatisierungslösungen ist es bedeutsam, Anwendungsprogramme auch auf ihre Sicherheit überprüfen zu können. Beispielsweise soll verhindert werden, dass ein Industrieroboter Bewegungen in einen sicherheitskritischen Bereich durchführt und dabei Menschen gefährdet bzw. Maschinen oder Einrichtungen beschädigt. Dies ist mit wachsender Komplexität der Automatisierungslösungen zunehmend schwierig. Beispielsweise ist bei der Durchführung komplexer Abläufe und Bewegungen von Maschinen auch deren Nachlaufsicherheit zu gewährleisten. Im Zuge dessen sollen Programme unter sicherheitsrelevanten Aspekten geprüft und zertifiziert werden.

Im Rahmen einer solchen Prüfung ist es notwendig, aufwändige Tests durchzuführen und zu erstellen. Dies geschieht oftmals durch manuelle Eingabe unterschiedlicher Test-Szenarios. Dies ist umständlich, zeitaufwändig und oft auf eine Teilmenge der relevanten Szenarios beschränkt.

Konkret besteht das Problem, dass die Anwendungsprogramme der Automatisierungslösungen in einer "Automatisierungssprache" definiert sind, die hinsichtlich flexibler und umfänglicher Tests Einschränkungen aufweist.

"Automatisierungssprachen" im Sinne der vorliegenden Ausführungen umfassen insbesondere Programmiersprachen für speicherprogrammierbare Steuerungen, wie sie beispielsweise (aber nicht abschließend) in der Norm EN 61131-3 bestimmt sind, u.a.: Anweisungsliste (AWL), Kontaktplan (KOP), Funktionsbausteinsprache (FBS, auch bekannt als Funktionsplan (FUP) oder STEP 7), Ablaufsprache (AS) oder Strukturierter Text (ST).

Abgrenzend von den Automatisierungssprachen sind hier so genannte "höhere Programmiersprachen", z.B.: Java, C, C++, JavaScript, C#, Python, PHP, etc..

Eine **Aufgabe** besteht darin, einen insbesondere für sicherheitsrelevante Anwendungen verbesserten Umgang mit Anwendungsprogrammen für Automatisierungslösungen bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird ein Verfahren vorgeschlagen zum Testen einer Automatisierungsanwendung,
- bei dem Daten einer Automatisierungssprache für eine Testumgebung verarbeitet werden,
- bei dem die Testumgebung eine Testumgebung für das reale System der Automatisierungsanwendung und/oder für mindestens eine Simulation der Automatisierungsanwendung umfasst,
- bei dem mindestens ein Test der Testumgebung durchgeführt wird.

Die Automatisierungsanwendung umfasst beispielsweise eine reale Automatisierungslösung oder eine Simulation der Automatisierungslösung. Die Automatisierungslösung ist beispielsweise ein Automatisierungssystem und umfasst beispielsweise Automatisierungseinheiten wie Fertigungsmaschinen, Roboter, o.ä.

Es ist eine Weiterbildung, dass die Daten der Automatisierungssprache Elemente oder Module der Automatisierungssprache umfassen, die der Testeinheit bereitgestellt werden.

Es ist eine Weiterbildung, dass die Automatisierungssprache eine Programmiersprache für speicherprogrammierbare Steuerungen ist, insbesondere eine Programmiersprache entsprechend oder basierend auf der Norm 61131-3.

Es ist eine Weiterbildung, dass die Daten der Automatisierungssprache für die Testumgebung verarbeitet werden gemäß mindestens einer der folgenden Aktionen:
- Extrahieren von Ein-/Ausgabe-Variablen für die Testumgebung;
- Anpassung von Datentypen;
- Generierung von Test-Klassen basierend auf den Daten der Automatisierungssprache.

Es ist eine Weiterbildung, dass die Daten der Automatisierungssprache für die Testumgebung basierend auf zusätzlichen Referenzdaten verarbeitet werden.

Es ist eine Weiterbildung, dass die Daten der Automatisierungssprache für die Testumgebung basierend auf zusätzlichen Referenzdaten verarbeitet werden gemäß folgender Aktion:
- Die Daten werden mittels der Referenzdaten auf zulässige Werte oder Wertebereiche abgebildet, wobei insbesondere eine Anpassung aufgrund von Datentypen erfolgen kann.

Es ist eine Weiterbildung, dass eine Validierung durchgeführt wird, indem das reale System der Automatisierungsanwendung mit der mindestens einen Simulation der Automatisierungsanwendung verglichen wird.

Es ist eine Weiterbildung, dass eine Validierung durchgeführt wird, indem mindestens zwei Simulationen der Automatisierungsanwendung miteinander verglichen werden.

Es ist eine Weiterbildung, dass Elemente der Automatisierungssprache in ein Programm einer höheren Programmiersprache konvertiert werden und anhand des Programms mindestens eine Simulation der Testumgebung generiert oder modifiziert wird.

Es ist eine Weiterbildung, dass das Programm getestet wird.

Auch wird eine Vorrichtung vorgeschlagen zum Testen einer Automatisierungsanwendung umfassend eine Verarbeitungseinheit, wobei die Verarbeitungseinheit eingerichtet ist zur Durchführung der Schritte des hierin beschriebenen Verfahrens.

Die hier genannte Verarbeitungseinheit kann insbesondere als eine Prozessoreinheit und/oder eine zumindest teilweise festverdrahtete oder logische Schaltungsanordnung ausgeführt sein, die beispielsweise derart eingerichtet ist, dass das Verfahren wie hierin beschrieben durchführbar ist. Besagte Verarbeitungseinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen.

Die vorstehenden Erläuterungen betreffend das Verfahren gelten für die Vorrichtung entsprechend. Die Vorrichtung kann in einer Komponente oder verteilt in mehreren Komponenten ausgeführt sein.

Auch wird die oben genannte Aufgabe gelöst mittels eines Systems umfassend mindestens eine der hier beschriebenen Vorrichtungen.

Ferner wird eine Vorrichtung angegeben zum Testen einer Automatisierungsanwendung umfassend eine Testeinheit und eine Testumgebung,
- wobei die Testeinheit eingerichtet ist, um Daten einer Automatisierungssprache für die Testumgebung zu verarbeiten,
- wobei die Testumgebung eine Testumgebung für das reale System der Automatisierungsanwendung und/oder für mindestens eine Simulation der Automatisierungsanwendung umfasst,
- wobei die Testumgebung weiterhin eingerichtet ist, mindestens einen Test durchzuführen.

Die hier vorgestellte Lösung umfasst ferner ein Computerprogrammprodukt, das direkt in einen Speicher eines digitalen Computers ladbar ist, umfassend Programmcodeteile, die dazu geeignet sind, Schritte des hier beschriebenen Verfahrens durchzuführen.

Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode), die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

### Es zeigen

- FIG 1: ein schematisches Diagramm zur Veranschaulichung einer Erzeugung von Daten für die Durchführung eines Tests einer Automatisierungslösung;
- FIG 2: ein auf FIG 1 aufbauendes Blockdiagramm mit einer erweiterten Testumgebung;
- FIG 3: ein auf FIG 2 aufbauendes Blockdiagramm mit erweiterten Testmöglichkeiten.

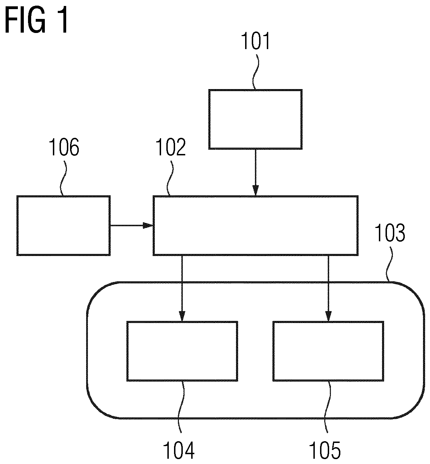

**FIG 1** zeigt ein schematisches Diagramm zur Veranschaulichung einer Erzeugung von Daten für die Durchführung eines Tests einer Automatisierungslösung. Die Automatisierungslösung kann dabei eine Mehrzahl von Automatisierungseinheiten, z.B. Fertigungsmaschinen, Roboter, etc., umfassen.

Ein Block 101 umfasst Elemente einer Automatisierungssprache. Wie eingangs erwähnt, kann es sich um eine Automatisierungssprache entsprechend der Norm EN61131-3 oder um eine ähnliche Automatisierungssprache handeln. Die Elemente der Automatisierungssprache definieren beispielsweise eine Bibliothek (auch bezeichnet als Library) von Anweisungen (z.B. eine FUP-Library). Die Elemente der Automatisierungssprache können in Form von Modulen vorliegen, wobei jedes Modul mindestens eine Funktion (Funktionsbaustein, Funktionsaufruf) und/oder mindestens eine Reihe von Anweisungen umfasst.

Weiterhin umfasst FIG 1 eine **Testeinheit** 102. Hierbei handelt es sich beispielsweise um eine Test-Suite für mindestens einen Test, der auf einer **Testumgebung** 103 durchgeführt wird.

Die Testumgebung 103 kann das reale System 104 (d.h. die konkrete Automatisierungslösung) und/oder (mindestens) eine Simulation 105 des realen Systems umfassen.

Die Testeinheit 102 dient der Vorbereitung des mindestens einen Tests auf der Testumgebung 103. Diese Vorbereitung auf der Testeinheit 102 umfasst beispielsweise eine Extraktion und/oder eine Aufbereitung von Informationen, basierend auf Daten, die von dem Block 101 bereitgestellt werden. Bei der Bereitstellung kann es sich insbesondere um eine Abfrage der Daten handeln, die von der Testeinheit 102 initiiert wird.

Beispielsweise werden die Daten von dem Block 101 an die Testeinheit 102 geliefert. Hierzu können Elemente der Automatisierungssprache aus Block 101 an die Testeinheit 102 übermittelt werden. Die Daten können beispielsweise in einem XML (Extensible Markup Language) Format bereitgestellt werden.

Basierend auf den erhaltenen Daten, extrahiert die Testeinheit 102 Informationen, die nachfolgend in der Testumgebung 103 verwendet werden können.

Optional verarbeitet die Testeinheit 102 die Daten unter Einbeziehung von Referenzdaten 106. Die Referenzdaten 106 können Teil der Testeinheit 102 sein und/oder von einer separaten Einheit bereitgestellt werden. Die Referenzdaten 106 umfassen beispielsweise Werte(bereiche) für die von der Testeinheit 102 extrahierten Variablen. Auch können Erwartungswerte, z.B. für Module, Teil der Referenzdaten 106 sein.

Die Verarbeitung der von dem Block 101 bereitgestellten Daten sowie optional der Referenzdaten 106 auf der Testeinheit 102 umfasst dabei mindestens eine der folgenden Aktionen:
(1) Ein-/Ausgabe-Variablen, die für die Testumgebung 103 maßgebend sind, werden extrahiert; dabei handelt es sich beispielsweise um externe Variablen, die nach außen sichtbar sind und die Testumgebung 103 beeinflussen, wohingegen interne (lokale) Variablen der Elemente der Automatisierungssprache ggf. weggelassen werden können. In einem Beispiel könnten externe von internen Variablen beispielsweise anhand des Deklarationsteils der Automatisierungssprache unterschieden werden. Diese Variablen sind beispielsweise geeignet, um einen erfolgreichen (oder ggf. auch nicht erfolgreichen) Test beurteilen zu können.
(2) Es kann eine Anpassung von Datentypen erfolgen. Beispielsweise können Datentypen der Automatisierungssprache in Datentypen der Testumgebung 103 angepasst werden.
(3) Die extrahierten Variablen können mittels der Referenzdaten 106 auf zulässige Werte bzw. Wertebereiche abgebildet werden. Hierbei kann ggf. auch eine Anpassung aufgrund unterschiedlicher Datentypen erfolgen.
(4) Die Verarbeitung der Daten (optional unter Berücksichtigung der Referenzdaten 106) erfolgt modulbezogen, d.h. abhängig von in dem Block 101 definierten Modulen. Insbesondere ist es möglich, dass Module als solche erkannt und für die Testumgebung entsprechend umgesetzt (vorbereitet) werden. Beispielsweise kann ein solches Umsetzen ein Abbilden einer in F-FUP vorliegenden Klasse mit den zugehörigen Methoden und Variablen umfassen, so dass bei Testdurchführung (der Testumgebung 103) eine Überprüfung möglich ist.
(5) Basierend auf den Daten der Automatisierungssprache werden Test-Klassen generiert.

Somit liefert die Testeinheit 102 Informationen (in Form von Daten) an die Testumgebung 103, anhand derer Tests auf dem realen System 104 und/oder der Simulation 105 durchgeführt werden können.

Somit ist es effizient möglich, basierend auf in einer Automatisierungssprache vorliegenden Elementen, einen automatisierten Test optional unter Einbeziehung von Referenzdaten vorzubereiten, d.h. insbesondere zu bestimmen und einzuleiten bzw. durchzuführen und die Ergebnisse zu prüfen.

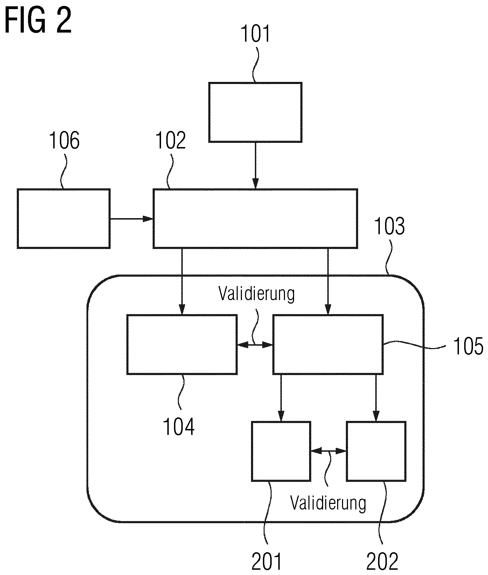

**FIG 2** zeigt ein auf FIG 1 aufbauendes Blockdiagramm mit einer erweiterten Testumgebung 103.

Wird gemäß den obigen Ausführungen mit Hilfe der Testeinheit 102 die Testumgebung 103 bestimmt, so kann das reale System 104 getestet werden als auch kann die Simulation 105 getestet werden. Vorzugsweise kann hierbei ein Vergleich zwischen den Aktionen des realen Systems 104 und den (simulierten) Aktionen der Simulation 105 durchgeführt werden und anhand von Abweichungen kann eine Validierung erfolgen: Wenn sich das reales System 104 und die Simulation 105 (im Rahmen vorgegebener Grenzen) gleich verhalten, kann die Validierung verifiziert werden, ansonsten wird sie nicht verifiziert und es kann beispielsweise eine Suche nach Gründen für die Abweichung(en) initiiert werden.

Das reale System 104 kann auch eine Referenzimplementierung aus der Automatisierungslösung umfassen, beispielsweise einen Testaufbau mit Automatisierungseinheiten oder Teilen von Automatisierungseinheiten.

Die Testumgebung 103 ermöglicht auch eine Überprüfung der Referenzdaten 106 oder Teile der Referenzdaten. So können anhand der Referenzdaten 106 z.B. Kalibrierungsbereiche vorgegeben sein, die in der Testumgebung überprüft und ggf. verifiziert werden. Optional werden die Referenzdaten 106 mittels der Testeinheit 102 geeignet aufbereitet bzw. transformiert, so dass eine Verwendung in der Testumgebung 103 möglich wird.

Weiterhin ist es möglich, dass im Rahmen der Simulation 105 unterschiedliche Simulationen basierend auf den von der Testeinheit 102 bestimmten Informationen durchgeführt werden. In dem vorliegenden Beispiel wird eine SIMATIC PLCSim Simulation 201 durchgeführt und eine Simulation basierend auf einer Software-Plattform .NET 202.

Auch hier kann ein Vergleich zwischen den beiden Simulationsvarianten 201 und 202 durchgeführt werden, d.h. es kann bestimmt werden, ob sich die Aktionen der Simulation PLCSim 201 von Aktionen der .NET Simulation 202 unterscheiden (die Ergebnisse unterscheiden sich beispielsweise um mehr als vorgegebene Grenzen). Bei einer solchen Diskrepanz werden die Simulationsvarianten 201 und 202 nicht erfolgreich validiert. Ansonsten, also bei einer (im Wesentlichen) Übereinstimmung der Aktionen der Simulationen, kann die Validierung verifiziert werden.

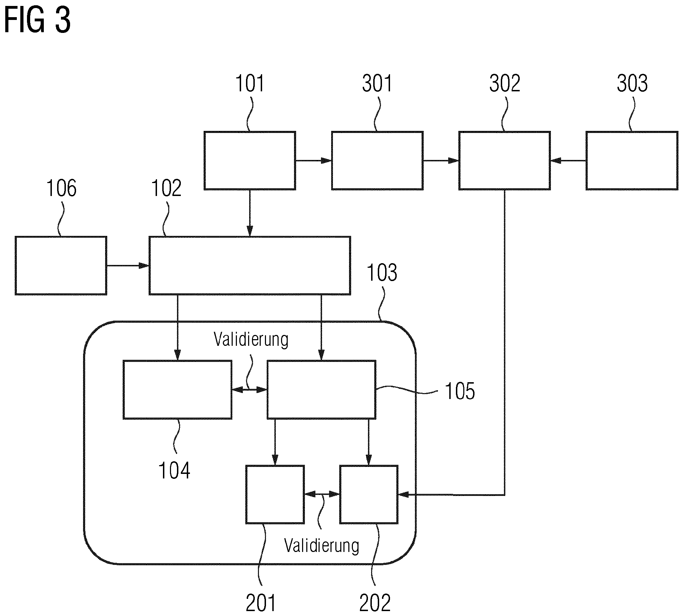

**FIG 3** zeigt ein auf FIG 2 aufbauendes Blockdiagramm mit erweiterten Testmöglichkeiten.

Zunächst werden die Elemente der Automatisierungssprache (Block 101) mittels eines Konverters 301 in ein Programm 302 einer höheren Programmiersprache transformiert bzw. übersetzt. Beispielsweise können so Module einer FUP-Programmiersprache in ein C# Programm übersetzt werden.

Ein Vorteil des Programms 302 besteht darin, dass es bekannten Programmtests unterworfen werden kann und das bekannte Testbibliotheken genutzt werden können, um das Programm 302 (systematisch) auf Fehler zu untersuchen. Ein weiterer Vorteil ist es, dass dem Programm 302 flexibel Referenzwerte übergeben werden können. Diese Möglichkeiten sind in FIG 3 durch einen Pfeil 303 angedeutet.

Das Programm 302 kann nun weiterhin genutzt werden, um eine Simulation, z.B. eine .NET Simulation 202, zu initiieren. Auch ist es von Vorteil, dass mehrere unterschiedliche Simulationen basierend auf dem Programm 302 gestartet werden können.

Hierbei ist es auch von Vorteil, dass die Domäne der Automatisierungssprache gemäß Block 101 anhand der Konvertierung 301 in die Domäne der höheren Programmiersprache transformiert wird und dort die zusätzlichen Möglichkeiten der höheren Programmiersprache flexibel zum Testen genutzt werden können. Das betrifft den Programmcode des Programms 302 ebenso wie die Möglichkeiten im Umgang mit der Testumgebung 103.

Somit kann im Rahmen der Validierung der unterschiedlichen Tests bestimmt werden, ob die Tests die gleichen Abweichungen betreffend die Bewegungen bzw. Pfade der beweglichen Teile der Automatisierungseinheiten aufweisen. Die Transformation in das Programm 302 ermöglicht darüber hinaus eine flexiblere, vereinfachte und transparentere Überprüfung der Software selbst. Somit können Anwenderprogramme modulbasiert bzw. als Gesamtlösung aus einer Vielzahl von Modulen getestet bzw. simuliert werden.

### Weitere Beispiele und Vorteile:

Anhand der Validierung der Simulation ist es möglich, vor Inbetriebnahme des realen Systems, Zeit und Kosten einzusparen.

Der hier vorgeschlagene Ansatz vereinfacht Engineering, Testen und ermöglicht eine vorausschauende kosteneffiziente Wartung, da Veränderungen des realen Systems erkannt werden können, bevor es zu (teuren) Schäden kommt.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

## Patentansprüche

1. Verfahren zum Testen einer Automatisierungsanwendung,
- bei dem Daten einer Automatisierungssprache für eine Testumgebung verarbeitet werden,
- bei dem die Testumgebung eine Testumgebung für das reale System der Automatisierungsanwendung und/oder für mindestens eine Simulation der Automatisierungsanwendung umfasst,
- bei dem mindestens ein Test der Testumgebung durchgeführt wird.

2. Verfahren nach Anspruch 1, bei dem die Daten der Automatisierungssprache Elemente oder Module der Automatisierungssprache umfassen, die der Testeinheit bereitgestellt werden.

3. Verfahren nach einem der vorhergehenden Ansprüche, bei dem die Automatisierungssprache eine Programmiersprache für speicherprogrammierbare Steuerungen ist, insbesondere eine Programmiersprache entsprechend oder basierend auf der Norm 61131-3.

4. Verfahren nach einem der vorhergehenden Ansprüche, bei dem die Daten der Automatisierungssprache für die Testumgebung verarbeitet werden gemäß mindestens einer der folgenden Aktionen:
- Extrahieren von Ein-/Ausgabe-Variablen für die Testumgebung;
- Anpassung von Datentypen;
- Generierung von Test-Klassen basierend auf den Daten der Automatisierungssprache.

5. Verfahren nach einem der vorhergehenden Ansprüche, bei dem die Daten der Automatisierungssprache für die Testumgebung basierend auf zusätzlichen Referenzdaten verarbeitet werden.

6. Verfahren nach Anspruch 5, bei dem die Daten der Automatisierungssprache für die Testumgebung basierend auf zusätzlichen Referenzdaten verarbeitet werden gemäß folgender Aktion:
- Die Daten werden mittels der Referenzdaten auf zulässige Werte oder Wertebereiche abgebildet, wobei insbesondere eine Anpassung aufgrund von Datentypen erfolgen kann.

7. Verfahren nach einem der vorhergehenden Ansprüche, bei dem eine Validierung durchgeführt wird, indem das reale System der Automatisierungsanwendung mit der mindestens einen Simulation der Automatisierungsanwendung verglichen wird.

8. Verfahren nach einem der vorhergehenden Ansprüche, bei dem eine Validierung durchgeführt wird, indem mindestens zwei Simulationen der Automatisierungsanwendung miteinander verglichen werden.

9. Verfahren nach einem der vorhergehenden Ansprüche, bei dem Elemente der Automatisierungssprache in ein Programm einer höheren Programmiersprache konvertiert werden und anhand des Programms mindestens eine Simulation der Testumgebung generiert oder modifiziert wird.

10. Verfahren nach Anspruch 9, bei dem das Programm getestet wird.

11. Vorrichtung zum Testen einer Automatisierungsanwendung umfassend eine Verarbeitungseinheit, wobei die Verarbeitungseinheit eingerichtet ist zur Durchführung der Schritte des Verfahrens nach einem der vorhergehenden Ansprüche.

12. Vorrichtung zum Testen einer Automatisierungsanwendung umfassend eine Testeinheit und eine Testumgebung,
- wobei die Testeinheit eingerichtet ist, um Daten einer Automatisierungssprache für die Testumgebung zu verarbeiten,
- wobei die Testumgebung eine Testumgebung für das reale System der Automatisierungsanwendung und/oder für mindestens eine Simulation der Automatisierungsanwendung umfasst,
- wobei die Testumgebung weiterhin eingerichtet ist, mindestens einen Test durchzuführen.

13. Computerprogrammprodukt, das direkt in einen Speicher eines digitalen Computers ladbar ist, umfassend Programmcodeteile zur Durchführung der Schritte des Verfahrens nach einem der Ansprüche 1 bis 10.

14. Computerlesbares Speichermedium, umfassend von einem Computer ausführbare Anweisungen, die geeignet sind, dass der Computer Schritte des Verfahrens nach einem der Ansprüche 1 bis 10 durchführt.
